# EUROPÄISCHE PATENTSCHRIFT

(11) **EP 1 138 440 B1**
(45) Veröffentlichungstag und Bekanntmachung des Hinweises auf die Patenterteilung: **13.10.2004**
(21) Anmeldenummer: 00127826.6
(22) Anmeldetag: 19.12.2000
(51) Int. Cl.: B24D 13/16, B24D 18/00, C08G 18/76, C09J 175/04

(54) **Schleifwerkzeug und Verfahren zu seiner Herstellung**
Grinding tool and method of manufacturing the same
Outil de meulage et son procédé de fabrication

(30) Priorität: 28.03.2000 DE 10015418
(43) Veröffentlichungstag der Anmeldung: 04.10.2001
(73) Patentinhaber: Gerd Eisenblätter GmbH, D-82538 Geretsried (DE)
(72) Erfinder: Eisenblätter, Gerd, 82549 Königsdorf (DE)
(74) Vertreter: Tomerius, Isabel, Dr.

(56) Entgegenhaltungen:
- US-A- 4 331 453

## Beschreibung

Die Erfindung betrifft ein Verfahren zur Herstellung eines Schleifwerkzeugs.

Als Beispiele von Schleifwerkzeugen können Schleifscheiben, Fächerschleifscheiben, Polierscheiben, Mop- oder Lamellenräder, Vliesräder oder sogenannte Mix- oder Kombiräder genannt werden, bei welchen Lamellen aus Schleifpapier und Schleifvlies miteinander kombiniert sind. Alle diese genannten Schleifwerkzeuge werden üblicherweise dadurch hergestellt, dass das Schleifmaterial - also beispielsweise Schleifpapier oder Schleifvlies - an einen Träger geklebt wird. Dieser Träger kann beispielsweise aus Kunststoff bestehen und eine Halterung aufweisen, mit welcher er an einer Schleifmaschine befestigt werden kann. Alternativ kann es sich bei dem Träger um einen vorläufigen Träger handeln, welcher wiederum an einem zweiten Träger befestigt wird, der die Halterung zur Verbindung mit der Schleifmaschine aufweist (EP 0 465 770 A1). Derartige vorläufige Träger bestehen beispielsweise aus Papier oder einem Gewebe.

Zum Befestigen des Schleifmaterials an dem (endgültigen oder vorläufigen) Träger wird im Stand der Technik üblicherweise ein Klebstoff auf der Basis eines Epoxidharzes verwendet (JP 01-16376 A). Ein solcher Epoxidharz-Kleber hat jedoch verschiedene Nachteile.
Da die Verwendung zweikomponentiger Epoxidklebstoffe in der Praxis erhebliche Schwierigkeiten bereitet, wird üblicherweise ein einkomponentiges Harz eingesetzt. Dieses besitzt jedoch den Nachteil, dass es bei erhöhter Temperatur (in der Regel um oder über 140 °C) ausgehärtet werden muss. Durch diesen zusätzlichen Arbeitsschritt und die erhöhten Energiekosten verlangsamt und verteuert sich die Herstellung herkömmlicher Schleifwerkzeuge.

Weiterhin führen die hohen Temperaturen dazu, dass das Phenolharz, mit welchem üblicherweise das Schleifkorn im Schleifmaterial angebunden ist, brüchig wird und herkömmliche Schleifwerkzeuge bereits im Lagerzustand "bröseln". Zudem löst sich das Schleifkorn bei Gebrauch des Schleifwerkzeuges relativ leicht ab. Die Standzeit herkömmlicher, unter Verwendung von Epoxidharz-Kleber hergestellter Schleifwerkzeuge ist deshalb nicht völlig zufriedenstellend.

Besonders nachteilig ist jedoch, dass viele Kunststoffe von vorne herein als Materialien für den Träger der Schleifwerkzeuge ausscheiden, da sie der Temperaturerhöhung zum Aushärten des Epoxidharzes nicht standhalten. Im Stand der Technik müssen daher für den Träger des Schleifwerkzeuges relativ teure, temperaturstabile Kunststoffe eingesetzt werden. ABS-Kunststoffe, welche gut zu verarbeiten und kostengünstig sind, konnten im Stand der Technik als Träger für Schleifwerkzeuge nicht eingesetzt werden.

Nachteilig bei der Verwendung von Epoxidharz als Klebstoff für Schleifwerkzeuge ist weiterhin, dass das ausgehärtete Epoxid sehr hart ist und praktisch keinerlei Elastizität mehr aufweist. Die unter Verwendung von Epoxidharz hergestellten Schleifwerkzeuge sind daher sehr starr. Sie können sich Verformungen während des Schleifvorgangs praktisch nicht anpassen. Es besteht daher die Gefahr, dass Schleifmaterial vom Träger abbricht. Zudem fangen herkömmliche Schleifwerkzeuge während des Schleifvorgangs entstehende Vibrationen praktisch nicht auf, so dass diese unvermindert auf den Handwerker übertragen werden.

In der US 4,331,453 A wird die Herstellung von Schleifbändern oder Schleifscheiben beschrieben, wobei Schleifkörner mit Hilfe eines speziellen Polyurethans in eine Vliesschicht eingebunden werden. Die Vliesschicht wird anschließen mit einem speziellen Polyurethan auf einen Stoffträger geklebt.

**Aufgabe** der Erfindung ist es, ein Verfahren zur Herstellung eines Schleifwerkzeugs anzugeben, welches die vorstehend beschriebenen Nachteile nicht aufweist. Das Schleifwerkzeug sollte unter Verwendung kostengünstiger Träger bei Raumtemperatur oder zumindest bei einer niedrigeren Temperatur als bisher herstellbar sein und zu einer weniger starren, flexiblen Anbindung des Schleifmaterials an den Träger führen.

Die Lösung dieser Aufgabe gelingt mit dem Verfahren gemäß Anspruch 1. Bevorzugte Verfahrensvarianten sind den Unteransprüchen zu entnehmen.

Bei der erfindungsgemäßen Herstellung des Schleifwerkzeugs wird das Schleifmaterial mit Hilfe eines Klebstoffs auf Polyurethan-Basis an den Träger geklebt. In einer ersten Variante der Erfindung besitzt dieser PU-Klebstoff beim Auftragen auf das Schleifmaterial und/oder den Träger eine Viskosität nach Brookfield (HBT, 20°C, DIN 53019) von mindestens 200.000 mPas. In einer zweiten Variante der Erfindung besitzt der PU-Klebstoff beim Ankleben des Schleifmaterials an den Träger eine Viskosität nach Brookfield (HBT, 20 ° C, DIN 53019) von mindestens 200.000 mPas.

Der PU-Klebstoff hat gegenüber herkömmlichem Epoxidharz-Klebstoff den Vorteil, dass er grundsätzlich bei Raumtemperatur verarbeitet werden kann und auch bei Raumtemperatur, unter Einwirkung der Luftfeuchtigkeit, aushärtet. Damit können auch alle solchen Trägermaterialien eingesetzt werden, welche den höheren Temperaturen zum Aushärten eines Epoxidharzes nicht standhalten. Als Träger des erfindungsgemäß hergestellten Schleifwerkzeugs können daher vor allem die kostengünstigen, aber temperaturempfindlicheren Kunststoffe eingesetzt werden, beispielsweise ABS (Acrylnitril-Butadien-Styrol). Auch unter dem Gesichtspunkt der chemischen Beständigkeit ist der erfindungsgemäß verwendete Klebstoff auf Polyurethan-Basis mit diesen Kunststoffen gut kompatibel.

Weiterhin wird die Beschädigung des Phenolharzes vermieden, welches üblicherweise zum Anbinden des Schleifkorns im Schleifmaterial verwendet wird. Die eingangs beschriebenen Nachteile, dass das Phenolharz spröde wird und das Schleifkorn sich ablöst, treten bei Verwendung von Polyurethan-Klebstoff nicht auf. Auch unter diesem Gesichtspunkt sind die erfindungsgemäß hergestellten Schleifwerkzeuge deshalb gegenüber den herkömmlichen Schleifwerkzeugen im Vorteil.

Nach dem Aushärten ist das Polyurethan zudem weniger hart und starr als das herkömmlicherweise verwendete Epoxid. Im erfindungsgemäß hergestellten Schleifwerkzeug ist die Anbindung des Schleifmaterials an den Träger vielmehr. elastisch. Es besteht deshalb praktisch keine Gefahr mehr, dass das Schleifmaterial während eines Schleifvorgangs vom Träger abbricht. Das Schleifmaterial im erfindungsgemäß hergestellten Schleifwerkzeug kann vielmehr den Bewegungen während des Schleifvorgangs in gewissem Grade folgen und so auch während des Schleifvorgangs entstehende Vibrationen auffangen. Die Handhabung eines erfindungsgemäß hergestellten Schleifwerkzeugs ist für den Handwerker daher sehr viel leichter zu kontrollieren und störungsfreier als bei Verwendung herkömmlicher Schleifwerkzeuge.

Der in der ersten Variante der Erfindung verwendete Polyurethan-Klebstoff weist beim Auftragen eine Viskosität nach Brookfield von mindestens 200.000 mPas auf. Dies stellt eine gute Verarbeitbarkeit sicher und ermöglicht auch die Verwendung des Klebstoffes bei der Herstellung von Fächerschleifscheiben, auf die noch näher eingegangen werden wird. Vorzugsweise ist die Viskosität größer als 400.000 mPas, insbesondere größer als 600.000 mPas und vor allem ≥ 750.000 mPas. Besonders bevorzugt ist die Viskosität ≥ 1.000.000 mPas. Unter den genannten Voraussetzungen ist der Klebstoff auf PU-Basis ausgezeichnet zu verarbeiten. Er lässt sich noch gut auftragen, ohne jedoch vom Schleifmaterial und/oder dem Träger, auf welche er aufgetragen wurde, wegzufließen.

Das Auftragen lässt sich jedoch erleichtern und der Förderdruck verringern, wenn der Klebstoff zuvor erwärmt und dadurch seine Viskosität herabgesetzt wird. Vor dem Ankleben des Schleifmaterials lässt man den Klebstoff dann soweit abkühlen, dass seine Viskosität bei mindestens 200.000 mPas liegt. Die Temperaturerhöhung erfordert zwar einen gewissen Energieaufwand, jedoch liegt dieser deutlich niedriger als im Falle der Verwendung herkömmlicher Epoxidklebstoffe. Dies liegt zum einen daran, dass in der Regel die Temperatur, bei welcher die PU-Klebstoffe verarbeitet werden, etwa im Bereich der Temperatur liegt, bei der die Epoxidklebstoffe aushärten. Dabei muss aber im Falle der Erfindung nur der Klebstoff selbst kurzzeitig erwärmt werden, während im Stand der Technik das komplette Schleifwerkzeug über einen langen Zeitraum zum Aushärten des Klebstoffs erwärmt werden muss. Die Temperaturbelastung, der das Schleifwerkzeug insgesamt ausgesetzt ist, ist in letzterem Fall erheblich höher. Im Falle der Erfindung dagegen entsteht die Temperaturbelastung nur sehr kurzzeitig und lokal auf diejenigen Bereiche begrenzt, auf welche der Klebstoff aufgetragen wird, und ist insgesamt praktisch vernachlässigbar.
Ein weiterer Vorteil der Erwärmung des PU-Klebstoffs besteht darin, dass zumindest ein Teil der für die Erwärmung aufgebrachten Energie dadurch wieder eingespart werden kann, dass weniger leistungsstarke Pumpvorrichtungen zum Auftragen des Klebstoffs verwendet werden können.

Die Temperatur, bei welcher der Polyurethan-Klebstoff verarbeitet wird, hängt in erster Linie vom gewählten Klebstoff selbst, von der gewünschten Verarbeitungsgeschwindigkeit und von den übrigen verwendeten Komponenten ab. Besonders geeignet sind einkomponentige PU-Schmelzklebstoffe, die eine Verarbeitungstemperatur zwischen etwa 100 bis 200 °C, insbesondere zwischen 120 und 180 °C, besitzen. In diesem Temperaturbereich weisen viele bekannte PU-Schmelzklebstoffe beispielsweise eine Viskosität zwischen 20.000 und 150.000 mPas auf. Die Viskosität sollte sich zweckmäßig nach dem Auftragen durch Abkühlen relativ rasch erhöhen, jedoch sollte der Klebstoff mindestens so lange offen bleiben, bis das Schleifmaterial an den Träger geklebt ist. PU-Schmelzklebstoffe, die diese Voraussetzungen erfüllen, sind grundsätzlich bekannt. Sie besitzen bei Raumtemperatur im allgemeinen eine wachsartige Konsistenz und härten meist erst innerhalb von einigen Tagen unter dem Einfluss der Luftfeuchtigkeit bei Raumtemperatur vollständig aus.
Die Geschwindigkeit, mit welcher sich die Viskosität des aufgetragenen Schmelzklebstoffs erhöht, kann auch über die Art der Auftragung gesteuert werden. Voluminöse, dicke Klebstoffauftragungen halten ihre erhöhte Temperatur länger als dünne Schichten und bleiben länger offen.

Besonders bevorzugt ist es, den PU-Klebstoff soweit abkühlen zu lassen, dass seine Viskosität zumindest partiell größer als 400.000 mPas, insbesondere größer als 600.000 mPas und vorzugsweise ≥ 750.000 mPas ist. Vor allem für die Herstellung von Fächerschleifscheiben können partiell noch höhere Viskositäten, beispielsweise von ≥ 1.000.000 mPas, sinnvoll sein. Hohe Viskositäten sind zum Beispiel dann erwünscht, wenn sich das angeklebte Schleifmaterial nicht mehr von allein auf dem Träger verschieben soll. Hierfür kann es jedoch ausreichen, wenn der Klebstoff nur in einem Teilbereich eine erhöhte Viskosität zeigt. In der Regel wird dieser Bereich erhöhter Viskosität an der Oberfläche des Klebstoffs entstehen, da der Klebstoff von außen nach innen abkühlt und entsprechend seine Viskosität von außen nach innen zunehmend ansteigt. Es bildet sich also eine Art Haut, deren Dicke beim Abkühlen zunimmt. Allein diese relativ feste Haut kann bereits ausreichen, um das Schleifmaterial hinreichend gegen unbeabsichtigtes Verrutschen zu schützen.

Die Verarbeitung der PU-Klebstoffe bei Herstellung der erfindungsgemäß hergestellten Schleifwerkzeuge kann unter Verwendung an sich bekannter Auftragungsvorrichtungen erfolgen. Geschieht das Aufbringen unter Erwärmung des Klebstoffs, werden vorzugsweise sogenannte Hotmeltanlagen verwendet. Bevorzugt sind solche Anlagen, in denen in Säcken, Fässern oder ähnlichen Verpackungen portioniertes Klebemittel erwärmt wird, da durch geeignete Wahl der Verpackungsgröße der Verlust an nicht verbrauchtem Klebemittel gering gehalten werden kann. Außerdem bleibt der Klebstoff vor Luft und Verschmutzungen geschützt. Zweckmäßig werden auch die zur Förderung des Klebemittels verwendeten Leitungen beheizt, also beispielsweise Anlagen mit Heizschläuchen verwendet, um einen Temperaturverlust während der Förderung des erwärmten Klebstoffs möglichst zu verhindern.

Falls gewünscht, kann das endgültige Aushärten des PU-Klebstoffs beschleunigt werden. Vorzugsweise geschieht dies, indem die Luftfeuchtigkeit in der Umgebung des fertigen Schleifwerkzeugs erhöht wird. Die Erhöhung der Luftfeuchtigkeit kann vor und/oder nach dem Verpacken der Schleifwerkzeuge erfolgen. Beispielsweise ist es möglich, der Verpackung gezielt Feuchtigkeit zuzuführen - zum Beispiel durch Einspritzen einer ausreichenden Menge Wasser in die Verpackung -, so dass der Aushärtungsvorgang sich bei den bereits verpackten Schleifwerkzeugen fortsetzt.

Eine besonders bevorzugte Anwendung des PU-Klebstoffs ist die Herstellung von Fächerschleifscheiben. Hierbei wird der PU-Klebstoff zunächst auf einen Träger für eine Fächerschleifscheibe aufgetragen. Anschließend werden die einzelnen Lamellen, welche beispielsweise aus einem Schleifband abgetrennt worden sind, nacheinander ringförmig in den auf dem Träger aufgebrachten Klebstoff gestellt, so dass sie im Wesentlichen senkrecht zu der Aufbringungsfläche des Trägers stehen. Aufgrund der zumindest partiell hohen Viskosität des erfindungsgemäß eingesetzten Klebstoffes ist dies ohne Weiteres möglich. Die aufgesetzten Lamellen bleiben für den erforderlichen Zeitraum senkrecht stehen, ohne sich seitlich wegzuneigen. Nachdem der Träger vollständig mit Schleiflamellen bestückt worden ist, werden Letztere nacheinander so in Richtung auf den Träger gedrückt, dass die mit Schleifkorn belegte Seite des Schleifmaterials nach oben zeigt. Falls erforderlich, können die Schleiflamellen zusätzlich noch über die gesamte Oberfläche des Schleifwerkzeugs in Richtung auf den Träger angepresst werden.

Als Klebstoff auf Polyurethan-Basis wird vorzugsweise ein einkomponentiges Isocyanat-Prepolymer verwendet. Besonders zweckmäßig wird ein Prepolymer auf der Basis von Diphenylmethan-diisocyanat (MDI) eingesetzt. Dabei können die 4,4'-, 2,4'- und 2,2'-lsomere entweder allein oder im Gemisch miteinander verwendet werden. Der Anteil des Diphenylmethan-diisocyanats im Klebstoff liegt vorzugsweise bei 30 bis 80 Gew.-% und insbesondere bei 40 bis 70 Gew.-%.

Das eingesetzte Isocyanat-Prepolymer kann die im Stand der Technik üblichen Zusätze und Füllstoffe enthalten. Zweckmäßig enthält es beispielsweise anorganische Füllstoffe wie Bariumsulfat und/oder amorphe Kieselsäuren. Die anorganischen Füllstoffe sind bevorzugt in einem Gewichtsanteil von 15 bis 65 % und insbesondere 25 bis 55 % im Prepolymer enthalten.

Als weitere zweckmäßige Komponente ist wenigstens ein Beschleuniger vorhanden, beispielsweise ein solcher auf Aminbasis. Weitere übliche Komponenten des Isocyanat-Prepolymers sind Farbstoffe, Pigmente und Lösemittel. Diese und gegebenenfalls weitere Komponenten können dem im Stand der Technik Üblichen entsprechen.

Das Klebemittel auf Polyurethan-Basis kann nicht nur zur Herstellung der bereits ausdrücklich erwähnten Fächerschleifscheiben eingesetzt werden, sondern zur Herstellung grundsätzlich aller üblichen Schleifwerkzeuge. Beispielhaft können Schleif- und Polierscheiben genannt werden sowie die verschiedenen Typen von Schleif- oder Polierrädern. Hier sind unter anderem Mop- oder Lamellenräder (Schleifbolte) sowie die verschiedenen Typen von Vliesrädern zu nennen. Dies wären beispielsweise Lamellenvliesräder, geschäumte Vliesräder oder die sogenannten Mix- oder Kombiräder, bei denen Schleiflamellen und Schleifvlies miteinander kombiniert sind. Bei der Herstellung derartiger Schleifräder kann der Polyurethan-Klebstoff unmittelbar auf den Mitnehmer (die Walze) aufgetragen werden, welcher die Achse der Schleifmaschine aufnimmt. Dadurch vereinfacht und verbilligt sich die Herstellung derartiger Schleifräder.

Die Erfindung soll nachfolgend anhand einer Zeichnung näher erläutert werden. Darin zeigen schematisch:
- Fig. 1: eine Vorstufe einer erfindungsgemäß hergestellten Fächerschleifscheibe und
- Fig. 2: eine erfindungsgemäß hergestellte Fächerschleifscheibe.

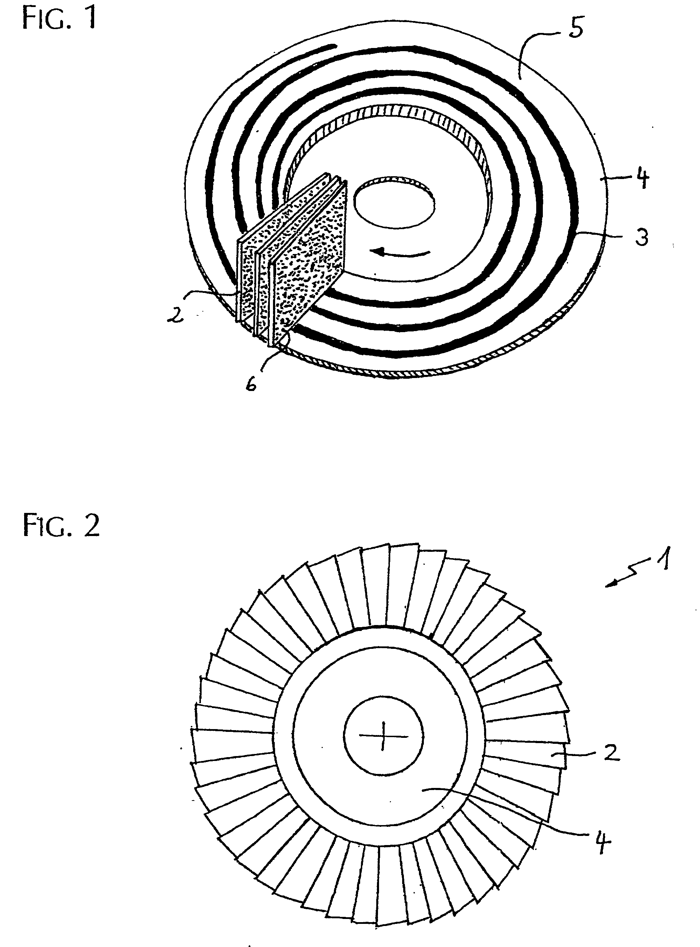

Fig. 1 zeigt eine Vorstufe einer erfindungsgemäß hergestellten Fächerschleifscheibe und dient zur Erläuterung des erfindungsgemäßen. Verfahrens. Als Schleifmaterial 2 dienen für die Fächerschleifscheibe eine Vielzahl von Lamellen, welche von einem Schleifband abgeschnitten wurden. Das Schleifband besteht aus einer Textilunterlage, auf welche mit Phenolharz Schleifkorn 6 aufgeklebt ist. Im gezeigten Fall sind die Lamellen so angeordnet, dass die mit Schleifkorn 6 belegten Seiten auf den Betrachter zuweisen. Vor dem Bestücken des Trägers 4, hier einem Kunststoffring aus ABS, wird auf die Bestückungsfläche 5 des Trägers 4 erfindungsgemäß Klebstoff auf Polyurethan-Basis aufgetragen. In der Darstellung ist der Klebstoff 3 spiralförmig in mehreren Ringen auf den Träger 4 aufgebracht worden.

Anschließend wird der Träger 4 mit einer Vielzahl von Lamellen bestückt. Die Lamellen 2 werden nacheinander im Wesentlichen senkrecht in den Klebstoff 3 gestellt, bis auf dem Träger 4 ein geschlossener Ring aus Lamellen vorhanden ist. Der Übersichtlichkeit halber sind hier nur einige wenige Lamellen dargestellt.
Das Einstellen der Lamellen erfolgt bei einer Viskosität des Klebstoffs von mindestens 200.000 mPas - entweder, wenn der Klebstoff nicht erwärmt wurde, relativ kurzzeitig nach dessen Auftragen oder, wenn der Klebstoff zum Auftragen erwärmt wurde, nachdem er soweit abgekühlt ist, dass die angegebene untere Viskositätsgrenze wenigstens erreicht worden ist.

Besonders bevorzugt erfolgt das Einstellen der Schleiflamellen erst, wenn der Klebstoff eine so hohe Viskosität erreicht hat, dass sich die Lamellen nicht unbeabsichtigt seitlich aus ihrer Einstellposition weg neigen können. Dafür weist zweckmäßig zumindest die äußere Schicht des Klebstoffs eine Viskosität auf, die größer als 400.000 mPas, insbesondere größer als 600.000 mPas und vorzugsweise ≥ 750.000 mPas ist. Besonders zweckmäßig liegt die Viskosität in der äußersten Schicht nicht unter 1.000.000 mPas.

Nach dem Abschluss der Bestückung mit Lamellen werden die Lamellen nach dem "Domino-Prinzip" nacheinander in Richtung auf den Träger gedrückt und zwar derart, dass die mit Schleifkorn 6 versehene Seite der Lamellen nach oben zeigt.
In Fig. 1 ist dieser Vorgang durch den Pfeil verdeutlicht. Falls erforderlich, können die Lamellen anschließend noch ganzflächig an den Träger 4 gedrückt werden, um sie gleichmäßig an den Träger anzupressen.

Nach dem Aushärten des Klebstoffs bei Raumtemperatur wird eine Fächerschleifscheibe 1 alserfindungsgemäß "hergestelltes" Schleifwerkzeug erhalten, wie sie in Fig. 2 dargestellt ist.

## Patentansprüche

1. Verfahren zur Herstellung eines Schleifwerkzeugs (1), bei welchem Schleifmaterial (2) mit einem Klebemittel (3) an einen Träger (4) angeklebt wird und das Klebemittel (3) ein Klebstoff auf Polyurethan-Basis ist,
**dadurch gekennzeichnet,**
**dass** das Klebemittel (3)
- beim Auftragen auf das Schleifmaterial und/oder den Träger eine Viskosität nach Brookfield (HBT, 20°C, DIN 53019) von mindestens 200.000 mPas besitzt, oder
- beim Ankleben des Schleifmaterials an den Träger eine Viskosität nach Brookfield (HBT, 20°C, DIN 53019) von mindestens 200.000 mPas besitzt.

2. Verfahren gemäß Anspruch 1,
**dadurch gekennzeichnet,**
**dass** der Klebstoff auf Polyurethan-Basis auf den Träger (4) aufgebracht und anschließend das Schleifmaterial (2) an den Träger (4) geklebt wird.

3. Verfahren gemäß Anspruch 1 oder 2,
**dadurch gekennzeichnet,**
**dass** das Schleifwerkzeug (1) eine Schleifscheibe, Fächerschleifscheibe, Polierscheibe, ein Moprad, Vliesrad, geschäumtes Vliesrad oder Kombirad ist.

4. Verfahren gemäß Anspruch 3 zur Herstellung einer Fächerschleifscheibe,
**dadurch gekennzeichnet,**
**dass** das Klebemittel (3) auf den Träger (4) aufgebracht wird, anschließend einzelne Lamellen des Schleifmaterials (2) nacheinander ringförmig und im Wesentlichen senkrecht zum Träger (4) in den auf dem Träger aufgebrachten Klebstoff (3) gestellt und schließlich die vom Träger wegstehenden Enden der Lamellen (2) nacheinander derart in Richtung auf den Träger (4) gedrückt werden, dass die mit Schleifkorn (6) belegte Seite des Schleifmaterials vom Träger weg zu liegen kommt.

5. Verfahren gemäß einem der Ansprüche 1 bis 4,
**dadurch gekennzeichnet,**
**dass** der Klebstoff (3) vor dem Auftragen erwärmt wird, man ihn nach dem Auftragen abkühlen lässt, bis seine Viskosität mindestens 200.000 mPas beträgt, und dann das Schleifmaterial (2) an den Träger (4) geklebt wird.

6. Verfahren gemäß Anspruch 5,
**dadurch gekennzeichnet,**
**dass** man den Klebstoff solange abkühlen lässt, dass seine Viskosität zumindest partiell größer als 400.000 mPas, insbesondere größer als 600.000 mPas und vorzugsweise ≥ 750.000 mPas ist.

7. Verfahren gemäß Anspruch 6,
**dadurch gekennzeichnet,**
**dass** man den Klebstoff solange abkühlen lässt, dass seine Viskosität zumindest partiell ≥ 1.000.000 mPas ist.

8. Verfahren gemäß einem der Ansprüche 5 bis 7,
**dadurch gekennzeichnet,**
**dass** der Klebstoff (3) vor dem Auftragen auf 100 bis 200 °C, insbesondere auf 120 bis 180°C, erwärmt wird.

9. Verfahren gemäß einem der Ansprüche 1 bis 8,
**dadurch gekennzeichnet,**
**dass** der Klebstoff ein einkomponentiges Isocyanat-Prepolymer ist.

10. Verfahren gemäß einem der Ansprüche 1 bis 9,
**dadurch gekennzeichnet,**
**dass** der Klebstoff ein Prepolymer auf der Basis von Diphenylmethan-diisocyanat ist.

11. Verfahren gemäß Anspruch 10,
**dadurch gekennzeichnet,**
**dass** der Klebstoff Diphenyl-4,4'-diisocyanat und/oder Diphenyl-2,4'-diisocyanat und/oder Diphenyl-2,2'-diisocyanat enthält.

12. Verfahren gemäß Anspruch 10 oder 11,
**dadurch gekennzeichnet,**
**dass** der Anteil des Diphenylmethan-diisocyanats im Klebstoff 30 bis 80 Gew.-%, insbesondere 40 bis 70 Gew.-%, beträgt.

13. Verfahren gemäß einem der Ansprüche 9 bis 12,
**dadurch gekennzeichnet,**
**dass** der Klebstoff weiterhin anorganische Füllstoffe, insbesondere Bariumsulfat und/oder amorphe Kieselsäuren, enthält.

14. Verfahren gemäß Anspruch 13,
**dadurch gekennzeichnet,**
**dass** der Anteil an anorganischem Füllstoff im Klebstoff 15 bis 65 Gew.-%, insbesondere 25 bis 55 Gew.-%, beträgt.

15. Verfahren gemäß einem der Ansprüche 9 bis 14,
**dadurch gekennzeichnet,**
**dass** der Klebstoff wenigstens einen Beschleuniger auf Aminbasis enthält.

## Claims

1. Method of producing a grinding tool (1), wherein grinding material (2) is adhered to a carrier (4) with an adhesive agent (3), and the adhesive agent (3) is an adhesive based on polyurethane, **characterised in that** the adhesive agent (3),
- when applied to the grinding material and/or the carrier, has a viscosity according to Brookfield (HBT, 20° C, DIN 53019) of at least 200,000 mPas, or,
- when the grinding material is adhered to the carrier, said adhesive agent has a viscosity according to Brookfield (HBT, 20° C, DIN 53019) of at least 200,000 mPas.

2. Method according to claim 1, **characterised in that** the adhesive based on polyurethane is applied to the carrier (4), and subsequently the grinding material (2) is adhered to the carrier (4).

3. Method according to claim 1 or 2, **characterised in that** the grinding tool (1) is a grinding disc, a fan-type grinding disc, a polishing disc, a mop wheel, a web wheel, an expanded web wheel or a combination wheel.

4. Method, according to claim 3, of producing a fan-type grinding disc, **characterised in that** the adhesive agent (3) is applied to the carrier (4), individual strips of the grinding material (2) are subsequently inserted into the adhesive (3), which has been applied to the carrier, one after the other in an annular manner and substantially perpendicular to the carrier (4), and finally the ends of the strips (2) remote from the carrier are pressed one after the other towards the carrier (4) in such a manner that the side of the grinding material coated with grinding granules (6) comes to lie remote from the carrier.

5. Method according to one of claims 1 to 4, **characterised in that** the adhesive (3) is heated prior to being applied, it is allowed to cool after the application process until its viscosity amounts to at least 200,000 mPas, and then the grinding material (2) is adhered to the carrier (4).

6. Method according to claim 5, **characterised in that** the adhesive is allowed to cool for so long that its viscosity is at least partially greater than 400,000 mPas, more especially greater than 600,000 mPas and preferably ≥ 750,000 mPas.

7. Method according to claim 6, **characterised in that** the adhesive is allowed to cool for so long that its viscosity is at least partially ≥ 1,000,000 mPas.

8. Method according to one of claims 5 to 7, **characterised in that**, prior to being applied, the adhesive (3) is heated to between 100° and 200° C, more especially to between 120° and 180°C.

9. Method according to one of claims 1 to 8, **characterised in that** the adhesive is a one-component isocyanate prepolymer.

10. Method according to one of claims 1 to 9, **characterised in that** the adhesive is a prepolymer based on diphenyl methane diisocyanate.

11. Method according to claim 10, **characterised in that** the adhesive contains diphenyl-4,4'-diisocyanate and/or diphenyl-2,4'-diisocyanate and/or diphenyl-2,2'-diisocyanate.

12. Method according to claim 10 or 11, **characterised in that** the proportion of diphenyl methane diisocyanate in the adhesive amounts to between 30 and 80 % by wt., more especially between 40 and 70 % by wt..

13. Method according to one of claims 9 to 12, **characterised in that** the adhesive furthermore contains inorganic fillers, more especially barium sulphate and/or amorphous silicas.

14. Method according to claim 13, **characterised in that** the proportion of inorganic filler in the adhesive amounts to between 15 and 65 % by wt., more especially between 25 and 55 % by wt..

15. Method according to one of claims 9 to 14, **characterised in that** the adhesive contains at least one accelerator based on amine.

## Revendications

1. Procédé de fabrication d'un outil abrasif (1), dans lequel un matériau abrasif (2) est collé sur un support (4) au moyen d'un adhésif (3) et l'adhésif (3) est un adhésif à base de polyuréthane,
***caractérisé en ce que*** l'adhésif (3)
- possède, lors de l'application sur le matériau abrasif et/ou sur le support, une viscosité selon Brookfield (HBT, 20°C, DIN 53019) d'au moins 200 000 mPas, ou
- possède, lors du collage du matériau abrasif sur le support, une viscosité selon Brookfield (HBT, 20°C, DIN 53019) d'au moins 200 000 mPas.

2. Procédé selon la revendication 1, ***caractérisé en ce que*** l'adhésif à base de polyuréthane est appliqué sur le support (4) et le matériau abrasif (2) est ensuite collé sur le support (4).

3. Procédé selon la revendication 1 ou 2, ***caractérisé en ce que*** l'outil abrasif (1) est un disque abrasif, un disque abrasif à dents, un disque de polissage, un disque de touret à polir, un disque de feutre, un disque de feutre moussé ou un disque combiné.

4. Procédé selon la revendication 3 pour fabriquer un disque abrasif à dents, ***caractérisé en ce que*** l'adhésif (3) est appliqué sur le support (4), différentes lamelles du matériau abrasif (2) sont ensuite placées successivement en anneaux et sensiblement perpendiculairement au support (4) dans l'adhésif (3) appliqué sur le support, et les extrémités des lamelles (2) opposées au support sont enfin appuyées successivement en direction du support (4) de telle manière que la face du matériau abrasif portant le grain abrasif (6) vienne se placer du côté opposé au support.

5. Procédé selon l'une quelconque des revendications 1 à 4, ***caractérisé en ce que*** l'adhésif (3) est chauffé avant l'application, on le laisse refroidir après l'application jusqu'à ce que sa viscosité soit d'au moins 200 000 mPas, puis on colle le matériau abrasif (2) sur le support (4).

6. Procédé selon la revendication 5, ***caractérisé en ce qu'****on* laisse refroidir l'adhésif jusqu'à ce que sa viscosité soit au moins partiellement supérieure à 400 000 mPas, en particulier supérieure à 600 000 mPas et de préférence ≥ 750 000 mPas.

7. Procédé selon la revendication 6, ***caractérisée en ce qu'****on* laisse refroidir l'adhésif jusqu'à ce que sa viscosité soit au moins partiellement ≥ 1 000 000 mPas.

8. Procédé selon l'une quelconque des revendications 5 à 7, ***caractérisé en ce que*** l'adhésif (3) est chauffé avant l'application à une température comprise entre 100 et 200°C, en particulier entre 120 et 180°C.

9. Procédé selon l'une des revendications 1 à 8, ***caractérisé en ce que*** l'adhésif est un prépolymère d'isocyanate mono-composant.

10. Procédé selon l'une quelconque des revendications 1 à 9, ***caractérisé en ce que*** l'adhésif est un prépolymère à base de diisocyanate de diphénylméthane.

11. Procédé selon la revendication 10, ***caractérisé en ce que*** l'adhésif contient du diphényl-4,4'-diisocyanate et/ou du diphényl-2,4'-diisocyanate et/ou du diphényl-2,2'-diisocyanate.

12. Procédé selon la revendication 10 ou 11, ***caractérisé en ce que*** la part du diisocyanate de diphénylméthane dans l'adhésif est comprise entre 30 et 80 % en poids, en particulier 40 et 70 % en poids.

13. Procédé selon l'une quelconque des revendications 9 à 12, ***caractérisé en ce que*** l'adhésif contient de plus des charges de remplissage inorganiques, en particulier du sulfate de baryum et/ou des acides siliciques amorphes.

14. Procédé selon la revendication 13, ***caractérisé en ce que*** la part des charges de remplissage inorganiques dans l'adhésif est comprise entre 15 et 65 % en poids, en particulier entre 25 et 55 % en poids.

15. Procédé selon l'une des revendications 9 à 14, ***caractérisé en ce que*** l'adhésif contient au moins un accélérateur à base d'amine.
